(19) Europäisches Patentamt
European Patent Office
Office européen des brevets

(11) Veröffentlichungsnummer: **0 393 016 A2**

(12) # EUROPÄISCHE PATENTANMELDUNG

(21) Anmeldenummer: **90890103.6**

(22) Anmeldetag: **05.04.90**

(51) Int. Cl.$^5$: **B29C 43/00, D04H 1/54**

(30) Priorität: **13.04.89 AT 878/89**

(43) Veröffentlichungstag der Anmeldung:
**17.10.90 Patentblatt 90/42**

(84) Benannte Vertragsstaaten:
**AT BE CH DE DK ES FR GB IT LI LU NL SE**

(71) Anmelder: **Lenzing Aktiengesellschaft**
**A-4860 Lenzing(AT)**

(72) Erfinder: **Vodiunig, Robert, Dipl.-Ing.**
**Stollenweg 19/12**
**A-8700 Leoben(AT)**
Erfinder: **Rossak, Norbert, Ing.**
**Welsern 22**
**A-4872 Neukirchen a.d. Vöckla(AT)**
Erfinder: **Schobesberger, Manfred**
**Gerlham 44**
**A-4861 Seewalchen(AT)**
Erfinder: **Weinrotter, Klaus, Dipl.-Ing. Dr.**
**Stadtplatz 36**
**A-4840 Vöcklabruck(AT)**

(74) Vertreter: **Wolfram, Gustav, Dipl.-Ing.**
**Schwindgasse 7 P.O. Box 205**
**A-1041 Wien(AT)**

(54) **Schwer entflammbare, hochtemperaturbeständige Formkörper auf Basis von Polyimiden.**

(57) Zur Herstellung schwer entflammbarer, hochtemperaturbeständiger Formkörper wird ein handhabbares Flächengebilde aus Polyimidfasern der allgemeinen Formel

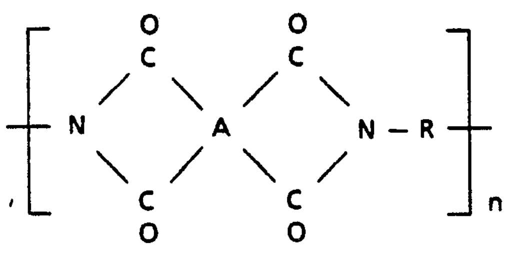

, (I)

worin A für eine vierbindige Gruppe und R für eine zweibindige aromatische Gruppe steht, auf eine Temperatur im Glasumwandlungsbereich zwischen 280°C und 360°C, vorzugsweise zwischen 310°C und 360°C, erhitzt und unter Verwendung von Formgebungsmittel bei Drücken zwischen 10 bar und 500 bar, vorzugsweise zwischen 100 bar und 350 bar, verpreßt.

Die erhaltenen Polyimid-Formkörper besitzen Dichten von mindestens 1,30 g/cm$^3$ und können vorzugsweise als Platte mit gleichmäßigen Dicken zwischen 0,1 mm und 6 mm ausgebildet sein.

EP 0 393 016 A2

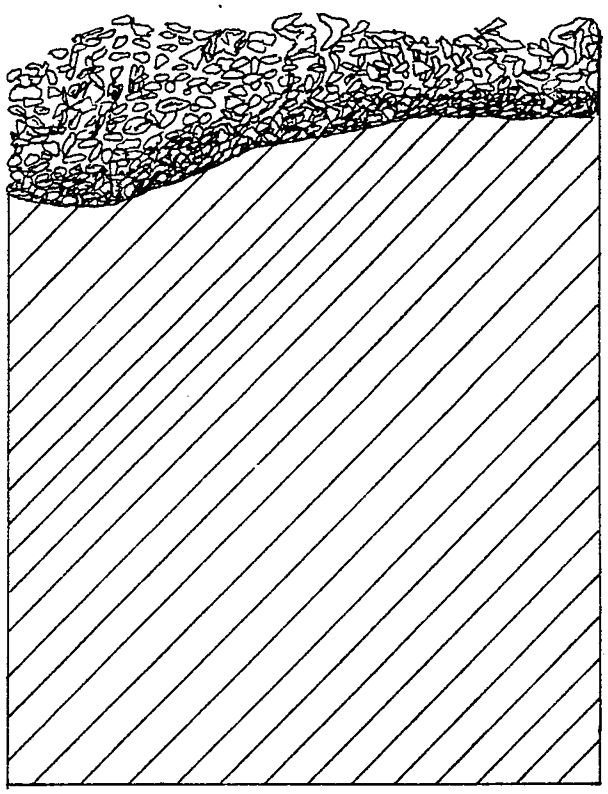

## Schwer entflammbare, hochtemperaturbeständige Formkörper auf Basis von Polyimiden

Die Erfindung betrifft schwer entflammbare, hochtemperaturbeständige Formkörper aus Polyimiden sowie ein Verfahren zu ihrer Herstellung.

Aromatische Polyimide sind u.a. wegen ihrer ausgeprägten Thermostabilität und ihrer Schwerentflammbarkeit begehrte Kunststoffe. Allerdings gestaltet sich ihre Verarbeitung zu Halbzeugen oder Fertigteilen oft schwierig, da sie zwar bei Temperaturen im Glasumwandlungsbereich manchmal plastisch verformbar, aber oft nicht schmelzbar sind. Die Herstellung von Formkörpern, wie Folien oder Platten, gelingt deshalb heute nur aus einer Polyimidlösung oder aus dem Polyimidpulver, falls das Ausgangsprodukt bereits in voll imidisierter Form vorliegt.

Folien können praktisch nur aus einer Lösung des Polymeren in einem hoch polaren Lösungsmittel im Gießverfahren hergestellt werden. Ein derartiges Verfahren ist aus der EP-A - 0 064 813 bekannt. Nach diesem Verfahren können aber nicht Folien beliebiger Dicke gegossen werden, da das Lösungsmittel aus der Folie entfernt werden muß, was nur bis zu einer bestimmten Folienstärke gelingt. In der Folie verbleibende Lösungsmittelreste können ihre Thermostabilität empfindlich verschlechtern.

Auch der Verarbeitung von Polyimidpulver sind enge Grenzen gesetzt. Gemäß dem von B.H. Lee in "Modern Plastic Encyclopedia 1988", Seite 62 beschriebenen Verfahren wird das Polyimidpulver bei hoher Temperatur und unter Druckanwendung versintert, wobei es manchmal erforderlich ist, Vorformlinge anzufertigen. Die Herstellung von Platten geringer Dicke gelingt nach diesem Verfahren nur schlecht, da es nicht möglich ist, Polyimidpulver großflächig, in geringer und vor allem gleichmäßiger Schütthöhe auszubreiten. Außerdem wird die Handhabung von feingemahlenem Polyimidpulver infolge Staubbildung erschwert.

Aus den genannten Gründen haben sich die bisher bekannten Polyimid-Formkörper mit Schichtdicken im Bereich von einigen Zehntel Millimetern bis zu einigen Millimetern in ihren thermischen und mechanischen Eigenschaften als nicht zufriedenstellend erwiesen.

Die Erfindung bezweckt die Vermeidung dieser Nachteile und sie besteht darin, daß schwer entflammbare, hochtemperaturbeständige Formkörper auf Basis von Polyimidfasern der allgemeinen Formel

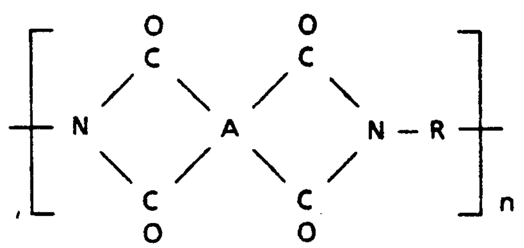
, (I)

worin n eine ganze Zahl größer als 1 bedeutet und A für eine vierbindige aromatische Gruppe ausgewählt aus

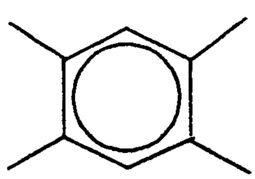
,
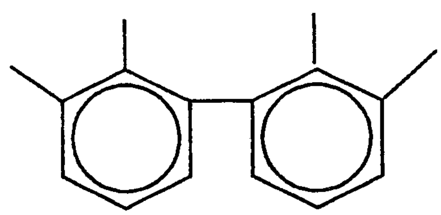
,
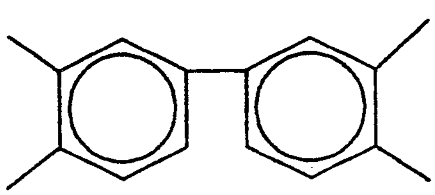
oder
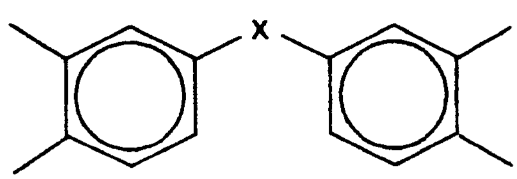

worin X für CO, $CH_2$, O, S, $CF_2$ steht und R für mindestens eine der folgenden zweibindigen aromatischen

Gruppen, ausgewählt aus

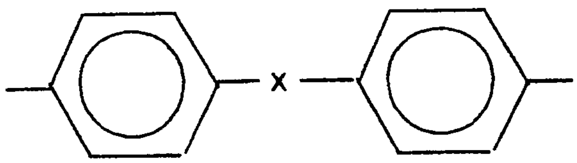 , 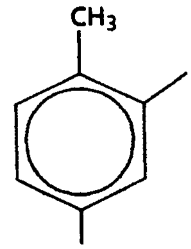 ,

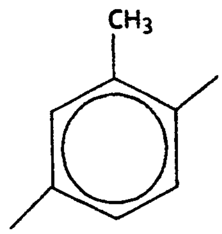 , oder 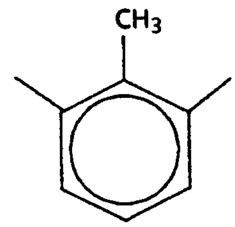

worin X wie oben definiert ist, steht, bereitgestellt werden, welche Formkörper eine Dichte von mindestens 1,30 g/cm$^3$ aufweisen.

Die erfindungsgemäßen Formkörper können als Platten mit gleichmäßiger Dicke zwischen 0,1 mm und 6 mm ausgeführt sein.

Weitere Eigenschaften der erfindungsgemäßen Formkörper können sein:

- Zugfestigkeit zwischen 50 und 200 N/mm$^2$
- Biegefestigkeit bis 160 N/mm$^2$ und
- E-Moduli bis 3200 N/mm$^2$.

Die erfindungsgemäßen Formkörper können hergestellt werden, indem ein handhabbares Flächengebilde aus Polyimidfasern der allgemeinen Formel

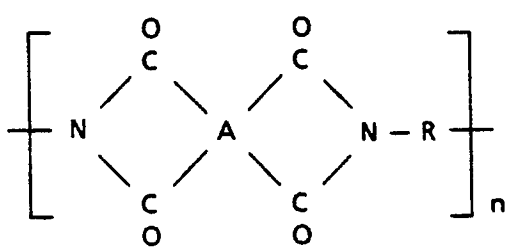 , (I)

worin n, A und R die im Anspruch 1 angegebene Bedeutung besitzen, auf eine Temperatur im Glasumwandlungsbereich zwischen 280° C und 360° C, vorzugsweise zwischen 310° C und 360° C, erhitzt und unter Verwendung von Formgebungsmittel bei einem Druck zwischen 10 bar und 500 bar, vorzugsweise zwischen 100 bar und 350 bar, verpreßt wird.

Polyimidfasern der genannten Art können z.B. nach dem in der österreichischen Patentanmeldung A 495/88 beschriebenen Verfahren hergestellt und zu handhabbaren Flächengebilden, wie Vliesen, Nadelfilzen oder anderen Faserverbunden, verarbeitet werden.

Ein derartiger Faserverbund ist bei Temperaturen im Glasumwandlungsbereich plastisch verformbar und entwickelt eine hohe Schrumpfkraft.

Die Erfindung beruht auf der Erkenntnis, daß die Fasern in diesem Zustand durch gleichzeitige Druckanwendung von mindestens 10 bar versintern, wobei sich der Faserverbund in hohem Maß verfestigt und ein kompakter und nahezu homogener Formkörper mit den beschriebenen Eigenschaften entsteht.

Dem erfindungsgemäßen Formkörper ist eine Faserstruktur äußerlich nicht mehr anzusehen. Eine erfindungsgemäße Polyimidplatte erscheint beispielsweise bis zu einer Dicke von etwa 2 mm durchsichtig und von rotbrauner Farbe. Auch mikroskopisch sind einzelne Fasern praktisch nicht mehr zu erkennen.

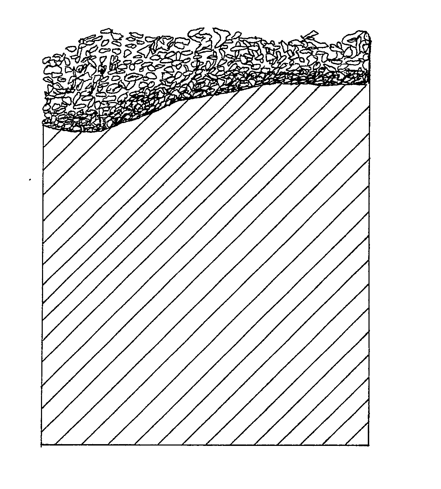

Die Zeichnung zeigt die Schnittfläche einer gesägten erfindungsgemäßen Platte bei 80-facher Vergrößerung, deren oberer Randbereich absichtlich nur unzureichend verpreßt wurde. In diesem Bereich sind noch deutlich einzelne Faserquerschnitte zu erkennen, während im Inneren der Platte aufgrund des hohen Druckes die Polyimidfasern bereits zu einer fast homogenen Masse verschmolzen sind.

Es hat sich als zweckmäßig erwiesen, den Faserverbund während einer Zeit zwischen 1 und 50 Minuten zu verpressen, wobei die optimale Preßzeit von der Dicke des Preßlings abhängt. Wird bei zu niedriger Temperatur verpreßt oder während einer zu kurzen Zeit, so entstehen lediglich papier-, pappe- oder lederähnliche Gebilde.

Ein großer Vorteil des erfindungsgemäßen Verfahrens gegenüber dem bekannten Sintern von Polyimidpulver liegt in der leichteren Handhabung des Faserverbundes gegenüber dem Pulver. Außerdem können erheblich dünnere Platten hergestellt werden, als dies mit der Pulvertechnik möglich ist. Dazu kommt noch, daß diese Platten auch gleichmäßig dick sind.

Eine vorteilhafte Ausführungsform des erfindungsgemäßen Verfahrens besteht darin, daß als handhabbare Flächengebilde mehrlagige Vliese und/oder mehrlagige Nadelfilze, vorzugsweise in hitzebehandeltem Zustand, verwendet werden. Es hat sich gezeigt, daß auch in diesem Fall beim Verpressen ein kompaktes und homogenes Material entsteht.

Der Polyimidfaserverbund kann auf einfache Weise auf Heißkalandern zu den erfindungsgemäßen Platten verpreßt werden. Die gefertigten Platten behalten ihre Plastizität bei Temperaturen im Glasumwandlungsbereich bei und können daher auch als Halbzeug mit bekannten Formverfahren, wie Tiefziehen oder Vakuumtiefziehen, weiterverarbeitet werden. Dies gelingt auch dann, wenn der Faserverbund vorher schon mehrere Male auf Temperaturen im Glasumwandlungsbereich erhitzt wurde. Diese Variante des erfindungsgemäßen Verfahrens hat den Vorteil, daß eventuell vorhandene niedermolekulare, emittierbare Bestandteile aus den Fasern entfernt werden können, bevor die Druckverformung zum erfindungsgemäßen Formkörper vorgenommen wird. Dagegen ist das Trocknen von Polyimidpulver nur in einem arbeitsaufwendigen Verfahren möglich.

Mit den nachfolgenden Beispielen wird die Erfindung noch näher erläutert. In allen Beispielen wurden homogene Materialien erhalten, deren Eigenschaften in Tabelle 1 zusammengefaßt sind.

Beispiel 1:

Ein thermobehandelter Polyimidfaser-Nadelfilz mit einer Dicke von 5 mm, der 15 min auf 340 °C erhitzt worden war, und zwei Lagen Polyimidfaser-Nadelfilz mit einem Flächengewicht von 90 g/m$^2$ wurden übereinandergestapelt. Das Gesamtgewicht betrug 15,4g. Zum Pressen wurde eine beheizte 2-Plattenpresse mit einer maximalen Schließkraft von 90 t verwendet. Um das Entformen zu erleichtern, wurden die geschliffenen Preßplatten mit einem Formtrennmittel besprüht.

Bei einer Plattentemperatur von 350 °C wurde das Preßgut zunächst 10 min mit 20 bar und 20 min mit 60 bar vorgepreßt, um eine gute Durchwärmung zu erreichen. Anschließend wurde 10 min mit 100 bar verpreßt. Danach wurde die Plattentemperatur innerhalb von weiteren 10 min auf 180 °C gekühlt, wobei der Preßdruck von 100 bar aufrecht erhalten wurde. Anschließend wurde entformt.

Beispiel 2:

Als Ausgangsmaterial wurde ein in Beispiel 1 beschriebenes Preßgut verwendet, das vor dem Verpressen in einem Umlufttrockenschrank 30 min bei 250 °C vorgewärmt wurde.

Bei einer Plattentemperatur von 350 °C wurde nach nur 5-minütigem Vorpressen mit 70 bar während 10 min mit 100 bar verpreßt. Danach wurde die Plattentemperatur innerhalb von weiteren 10 min auf 180 °C gekühlt, wobei der Preßdruck von 100 bar aufrecht erhalten wurde. Anschließend wurde entformt.

Obwohl während einer kürzeren Zeit als in Beispiel 1 vorgepreßt wurde, konnte ein Produkt mit höherer Dichte und höherer Zugfestigkeit erhalten werden. Dieser Effekt wird dem Vorwärmen des Preßgutes zugeschrieben.

Die elektrischen und dielektrischen Eigenschaften der erhaltenen Platte sind in Tabelle 2 zusammengefaßt. Die Widerstandswerte wurden mit Wechselstrom einer Frequenz von 1 MHz gemessen.

Beispiel 3:

Ein 15 min bei 340 °C thermobehandelter Polyimidfaser-Nadelfilz wurde in Streifen mit einer Breite von

15 mm und einer Länge von 100 mm geschnitten. Die Dicke betrug 4 mm. Die Nadelfilzstreifen wurden anschließend auf 250 °C in einem Umlufttrockenschrank vorgewärmt, in acht Lagen übereinandergelegt und zu einer Raumform verpreßt. Die Werkzeugtemperatur betrug 350 °C.

Zum Aufheizen wurde zunächst 5 min mit 70 bar vorgepreßt und schließlich 20 min mit 160 bar bei 350 °C fertiggepreßt. Anschließend wurde während 10 min auf 180 °C abgekühlt, wobei ein Preßdruck von 70 bar aufrecht erhalten wurde.

Beispiel 4:

Ein 15 min bei 340 °C thermobehandelter Polyimidfaser-Nadelfilz mit einer Dicke von 5 mm und einer Dichte von 0,30 g/cm³ wurde 30 min mit 160 bar bei 350 °C verpreßt. Die Faser wies einen $T_G$-Punkt von 334 °C auf. Der lineare Ausdehnungskoeffizient $\alpha$ betrug $5.10^{-5}$ $[K^{-1}]$. Weitere Daten sind der Tabelle 1 zu entnehmen.

Beispiel 5:

Drei Lagen Gewebe aus Polyimidfasern und zwei Lagen thermobehandelter Polyimidfaser-Nadelfilz mit einer Dicke von je 5 mm und einer Dichte von je 0,30 g/cm³ wurden 30 min auf 250 °C vorgewärmt. Das Gewebe und die Nadelfilze wurden übereinander gestapelt und 20 min bei 340 °C und 350 bar verpreßt.

Die Faser wies einen $T_G$-Punkt von 323 °C auf. Der lineare Ausdehnungskoeffizient $\alpha$ betrug $5{,}2.10^{-5}$ - $[K^{-1}]$. Weitere Daten sind der Tabelle 1 zu entnehmen.

Die erfindungsgemäßen Formkörper besitzen ausgezeichnete mechanische, elektrische und dielektrische Eigenschaften und können daher beispielsweise in der Elektrotechnik als Leiterplatten und als Isolierplatten verwendet werden.

Aufgrund ihrer tribologischen, mechanischen und thermischen Eigenschaften können sie auch als Lagerschalen, Anlaufscheiben, Gleitlager, Gehäuse oder Abdeckungen im Maschinenbau eingesetzt werden.

Eine weitere Verwendung ist im Flugzeugbau, beispielsweise für Verkleidungsteile im Passagierraum gegeben, ebenso in der Tieftemperaturtechnik sowie in der Hochvakuumtechnik.

Tabelle 1

| Beispiel | Dichte [g/cm³] | Dicke [mm] | Zugfestigkeit [N/mm²]* | Reißdehnung [%] | Biegefestigkeit** [N/mm²] | Biege-E-Modul*** [N/mm²] |
|---|---|---|---|---|---|---|
| 1 | 1,30 | 1,0 | 60 | 5 | - | - |
| 2 | 1,33 | 1,0 | 80 | 5 | - | - |
| 3 | 1,36 | 5,5 | 100 | 5 | 150 | 3000 |
| 4 | 1,36 | 1,0 | 100 | 5 | 160 | 3200 |
| 5 | 1,36 | 2,0 | 130 | 6 | - | - |

* gemessen in Anlehnung nach DIN 53 455
** nach DIN 53 452
*** nach DIN 53 457

Tabelle 2

| Messung Nr. | Temperatur °C | Verlustfaktor | Spezifischer Oberflächenwiderstand Ω | Spezifischer Durchgangswiderstand Ω cm | $\epsilon_R$ |
|---|---|---|---|---|---|
| 1. | 20 | 0,0071 | $2.10^{10}$ | $3.10^{13}$ | 3,4 |
| 2. | 40 | 0,0223 | $8.10^{9}$ | $7.10^{11}$ | 4,4 |
| 3. | 20 | 0,0168 | $2.10^{11}$ | $1.10^{14}$ | 4,22 |
| 4. | 150 | 0,0043 | $9.10^{10}$ | $2.10^{11}$ | 3,26 |
| 5. | 20 | 0,0019 | $1.10^{12}$ | $3.10^{14}$ | 3,64 |
| Messung Nr. 1: Ausgangsmessungen bei Raumtemperatur | | | | | |
| Messung Nr. 2: nach 96 Stunden Lagerung bei 40 °C und 92 % Luftfeuchte | | | | | |
| Messung Nr. 3: nach 16 Stunden Lagerung bei Raumtemperatur | | | | | |
| Messung Nr. 4: nach 4 Stunden Lagerung bei 150 °C | | | | | |
| Messung Nr. 5: nach Abkühlen auf Raumtemperatur | | | | | |
| Alle Messungen wurden nacheinander in der angegebenen Reihenfolge beginnend mit 1 durchgeführt. | | | | | |

**Ansprüche**

1. Schwer entflammbare, hochtemperaturbeständige Formkörper auf Basis von Polyimidfasern der allgemeinen Formel

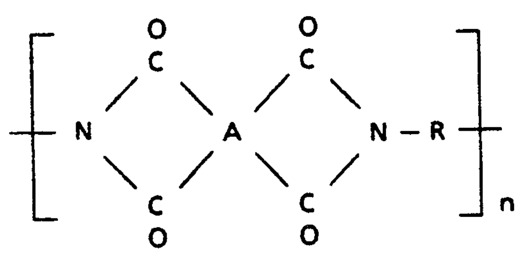 , (I)

worin n eine ganze Zahl größer als 1 bedeutet und A für eine vierbindige aromatische Gruppe ausgewählt aus

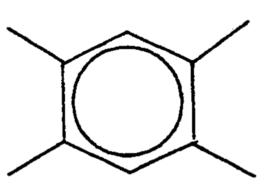 ,

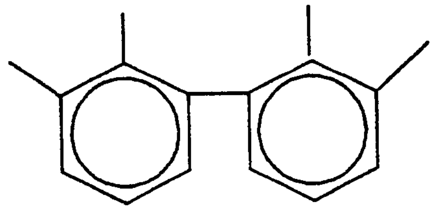 ,

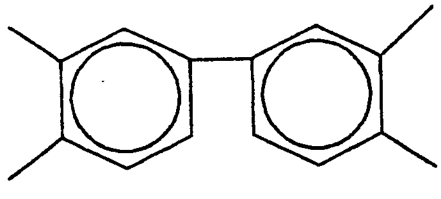 oder

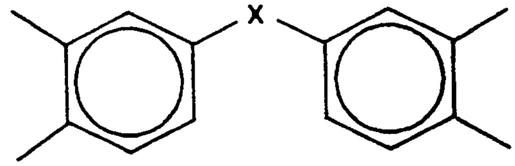

worin X für CO, $CH_2$, O, S, $CF_2$ steht und R für mindestens eine der folgenden zweibindigen aromatischen Gruppen, ausgewählt aus

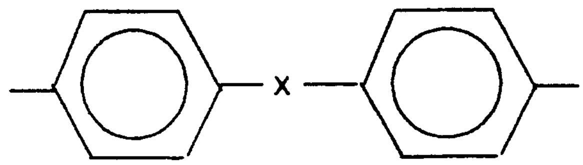 , 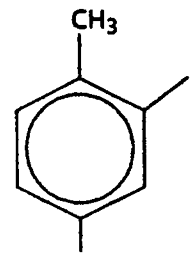 ,

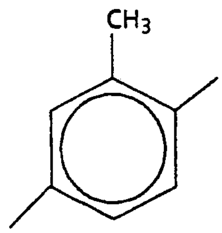 oder 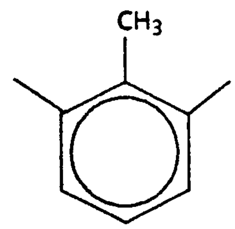 ,

worin X wie oben definiert ist, steht, welche Formkörper eine Dichte von mindestens 1,30 g/cm$^3$ aufweisen.

2. Formkörper nach Anspruch 1, ausgebildet als Platte, vorzugsweise mit gleichmäßiger Dicke zwischen 0,1 mm und 6 mm.

3. Formkörper nach einem der Ansprüche 1 oder 2, gekennzeichnet durch die weiteren Merkmale:

- Zugfestigkeit zwischen 50 und 200 N/mm$^2$
- Biegefestigkeit bis 160 N/mm$^2$ und
- E-Moduli bis 3200 N/mm$^2$.

4. Verfahren zur Herstellung schwer entflammbarer, hochtemperaturbeständiger Formkörper nach einem oder mehreren der Ansprüche 1 bis 3, dadurch gekennzeichnet, daß ein handhabbares Flächengebilde aus Polyimidfasern der allgemeinen Formel

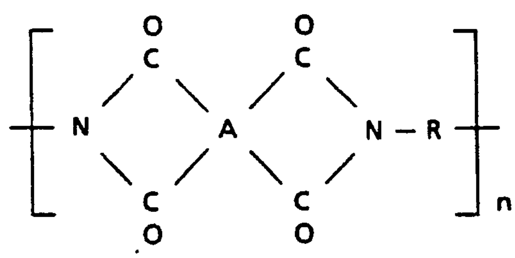 , (I)

worin n, A und R die im Anspruch 1 angegebene Bedeutung besitzen, auf eine Temperatur im Glasumwandlungsbereich zwischen 280 °C und 360 °C, vorzugsweise zwischen 310 °C und 360 °C, erhitzt und unter Verwendung von Formgebungsmittel bei einem Druck zwischen 10 bar und 500 bar, vorzugsweise zwischen 100 bar und 350 bar, verpreßt wird.

5. Verfahren nach Anspruch 4, dadurch gekennzeichnet, daß als handhabbare Flächengebilde mehrlagige Vliese und/oder mehrlagige Nadelfilze, vorzugsweise in hitzebehandeltem Zustand, verwendet werden.

6. Verfahren nach einem der Ansprüche 4 oder 5, dadurch gekennzeichnet, daß das handhabbare Flächengebilde vor dem Verpressen vorgewärmt wird.